# EUROPEAN PATENT APPLICATION

(11) **EP 4 369 573 A1**
(43) Date of publication of application: **15.05.2024**
(21) Application number: 22837479.9
(22) Date of filing: 22.06.2022
(51) Int. Cl.: H02K 5/22, H02G 3/30, H05K 7/00

(54) **CABLE HOLDING STRUCTURE FOR ROTATING ELECTRICAL MACHINE**

(30) Priority: 05.07.2021 JP 2021111483
(71) Applicant: Toshiba Industrial Products and Systems Corporation, Kawasaki-shi, Kanagawa, 212-0013 (JP)
(72) Inventor: MATSUMOTO, Masaaki, Mie-gun, Mie 510-8521 (JP); ARAKI, Takashi, Mie-gun, Mie 510-8521 (JP); MOCHIDUKI, Motoyasu, Mie-gun, Mie 510-8521 (JP)
(74) Representative: AWA Sweden AB
(86) International application number: PCT/JP2022/024879
(87) International publication number: WO 2023/282062

(57) **Abstract**

A cable holding structure according to an embodiment is for holding a cable of a rotating electrical machine 1 and includes a holding member 30 that holds the cable and is attached to a frame 8 that accommodates the rotating electrical machine 1, in which at least one attachment hole 27 for attachment of the holding member 30 is formed in the frame 8 along a wiring route of the cable. The holding member 30 has a head portion 32 that is provided with a through-hole 31 through which the cable passes and a shaft portion 33 that extends from the head portion 32, the holding member 30 being attached to the frame 8 by the shaft portion 33 being inserted into the attachment hole 27, the holding member holding the cable on a side of the frame 8.

## Description

### Technical Field

An embodiment of the present invention relates to a cable holding structure for holding a cable wired in a rotating electrical machine.

### Background Art

In the related art, a method of fixing a cable for facilitating handling when a rotating electrical machine is assembled has been proposed (see Patent Literature 1, for example).

### Citation List

### Patent Literature

Patent Literature 1: Japanese Translation of PCT international Application Publication No. 2019-193360

### Summary of Invention

### Technical Problem

In a rotating electrical machine, for example, in an in-vehicle rotating electrical machine, signal cables for transmitting control signals may be wired in addition to power cables for supplying power. Such signal cables need to be held in a predetermined wiring route in order to curb influences of noise and heat, for example, and are also required to allow for easy tasks such as holding and wiring of the cables.

Thus, a cable holding structure enabling a cable of a rotating electrical machine to be easily wired in a predetermined wiring route is provided.

### Solution to Problem

A cable holding structure for a rotating electrical machine according to an embodiment is for holding a cable of a rotating electrical machine, the cable holding structure for a rotating electrical machine includes a holding member that holds the cable and is attached to a frame that accommodates the rotating electrical machine, in which at least one attachment hole for attachment of the holding member is formed in the frame along a wiring route of the cable, and the holding member has a head portion that is provided with a through-hole through which the cable passes and a shaft portion that extends from the head portion, the holding member being attached to the frame by the shaft portion being inserted into the attachment hole, the holding member holding the cable on a side of the frame.

### Brief Description of Drawings

[Figure 1] Figure 1 is a diagram schematically illustrating a configuration example of a rotating electrical machine according to an embodiment.
[Figure 2] Figure 2 is a diagram schematically illustrating a wiring example of a cable.
[Figure 3] Figure 3 is a diagram schematically illustrating a configuration example of a frame cover.
[Figure 4] Figure 4 is a diagram schematically illustrating a wiring route of the cable and an assembly process of the rotating electrical machine.
[Figure 5] Figure 5 is a diagram schematically illustrating a configuration example of a holding member.
[Figure 6] Figure 6 is a diagram schematically illustrating examples of a wired state and a held state of the cable.
[Figure 7] Figure 7 is a diagram schematically illustrating another configuration example of the holding member.

### Description of Embodiment

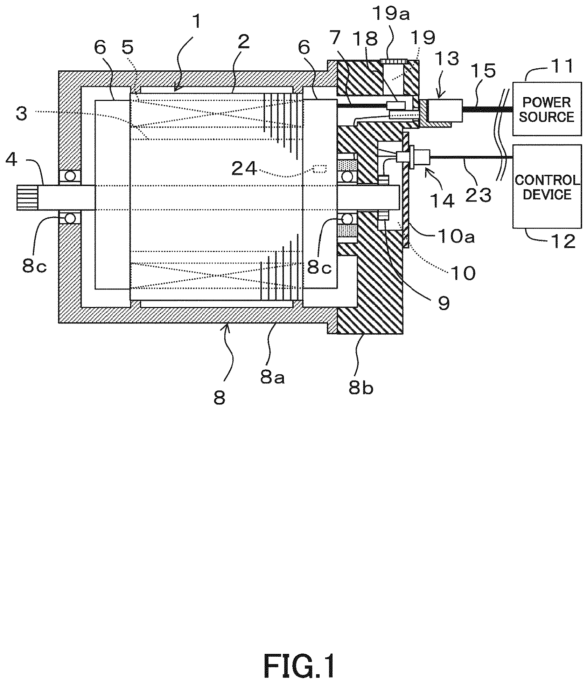

Hereinafter, an embodiment will be described with reference to the drawings. As illustrated in Figure 1, a rotating electrical machine 1 has a stator 2, a rotor 3, and a shaft 4. In the present embodiment, an in-vehicle rotating electrical machine 1 that is mounted in a vehicle is assumed. In the rotating electrical machine 1, a three-phase coil 5, for example, is attached on the inner circumferential side of the stator 2 as is well-known, and the coil 5 is shaped into an annular shape at both ends of the stator 2 in the axial direction and forms coil ends 6.

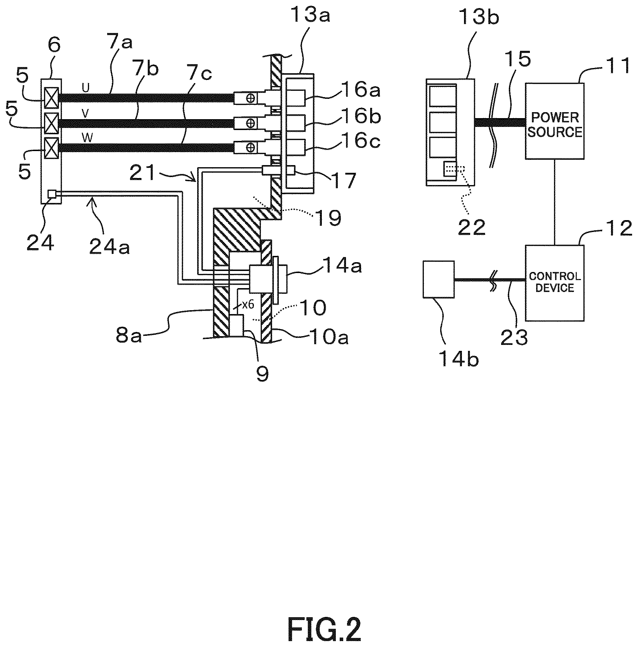

The end portion of the coil 5 of each phase is led out as a lead line 7 from the coil end 6, and power is supplied to the end portions. Although one lead line 7 is illustrated in Figure 1, three lead lines, namely a lead line 7a, a lead line 7b, and a lead line 7c for power supply are led out as illustrated in Figure 2 in the case of three phases.

The rotating electrical machine 1 is accommodated in a frame 8. The frame is formed into a substantially bottomed tubular shape and is configured of a main body portion 8a opened at one end portion and a cover 8b that is attached in the form in which the cover 8b blocks the opening of the main body portion 8a. Hereinafter, the space surrounded by the main body portion 8a and the cover 8b will be referred to as the inside of the frame 8, the surfaces of the main body portion 8a and the cover 8b on the inner side will be referred to as inner surfaces, and the surfaces on the outer side will also be referred to as front surfaces.

The main body portion 8a is formed into a size with which it is possible to accommodate substantially the entire rotating electrical machine 1 therein, and is provided with a bearing 8c that rotatably supports the shaft 4 at the center of the bottom portion on the left side in the illustration. In addition, a bearing 8c is also provided at the center part of the cover 8b. The rotating electrical machine 1 is accommodated in the frame 8 in a state in which the stator 2 is fixed to the inner surface of the main body portion 8a and the rotor 3 is supported by the bearings 8c at both ends of the shaft 4 and positioned on the inner circumferential side of the stator 2.

In addition, a resolver 9 is attached to the end portion of the shaft 4 on the side of the cover 8b. The resolver 9 is a so-called rotational angle sensor, detects a rotation state of the rotating electrical machine 1, and outputs the rotation state as an electrical signal. Moreover, the resolver 9 is located inside an arrangement space 10 on the side of the front surface of the cover 8b. The end portion of the shaft 4 is located in the arrangement space 10, and the arrangement space 10 is closed by a lid member 10a once assembly is completed. Hereinafter, the direction in which the shaft 4 extends will be referred to as the axial direction, the direction that is perpendicular to the axial direction will be referred to as the radial direction, and the direction around the axial direction will be referred to as the circumferential direction.

An external power source device 11 and control device 12 are connected to the rotating electrical machine 1. Therefore, the frame 8 is provided with external connection connectors for establishing connection with the power source device 11 and the control device 12. In the case of the present embodiment, the frame 8 is provided with two external connection connectors, namely a high-power-side connector 13 for establishing connection with the power source device 11 and a low-power-side connector 14 for establishing connection with the control device 12. However, the number of connectors to be connected is an example, and two or more connectors may be connected. Note that the high power and low power are used in a relative sense.

A three-phase AC power source of a U phase, a V phase, and a W phase, for example, is supplied to the high-power-side connector 13 from the power source device 11 as illustrated in Figure 2. The high-power-side connector 13 is configured of a high-power-side terminal block 13a attached on the side of the frame 8, here to the front surface of the cover 8b, and a high-power-side plug 13b. The high-power-side plug 13b is connected to the power source device 11 with a power cable 15.

The high-power-side terminal block 13a is provided with power terminals 16 for supplying power to the rotating electrical machine 1 and a fitting detection terminal 17 for detecting fitting as will be described later. As for the power terminals 16, three power terminals 16, namely a U-phase power terminal 16a, a V-phase power terminal 16b, and a W-phase power terminal 16c are provided in the present embodiment. Each power terminal 16 is provided in a state in which the power terminal 16 penetrates from the front surface side to the rear surface side of the cover 8b and is connected to the lead line 7 of respective phase inside the frame 8.

A crimp terminal 18 is attached to the distal end of the lead line 7 and is connected to each power terminal 16 of each phase with screwing, for example. In the present embodiment, the cover 8b is provided with an access space 19 that communicates from the front surface thereof to the screwing position as illustrated in Figure 1 such that it is possible to achieve the screwing in a state in which the cover 8b is assembled with the main body. The access space 19 is closed by a closing member 19a once the screwing task is completed.

The fitting detection terminal 17 is provided penetrating through the cover 8b, and a fitting detection line 21 is connected thereto inside the frame 8, as illustrated in Figure 2. The fitting detection line 21 is a cable as the target of holding in the present embodiment, which will be described later. A turning-back internal wiring 22 that comes into contact with the fitting detection terminal 17 is provided in the high-power-side plug 13b.

Therefore, when the high-power-side plug 13b is inserted into the high-power-side terminal block 13a, short-circuiting is achieved between two detection lines, namely a detection line 21a and a detection line 21b of the fitting detection line 21 if the high-power-side plug 13b is appropriately inserted. In this manner, it is possible to make determination, regarding a fitting state of the high-power-side connector 13, that is, determination regarding whether or not the state in which the high-power-side connector 13 has appropriately been connected, on the side of the control device 12 to which the fitting detection line 21 is connected, as will be described later.

The low-power-side connector 14 is configured of a low-power-side terminal block 14a attached on the side of the frame 8, here to the front surface of the cover 8b, and a low-power-side plug 14b that is connected to the control device 12 with a control cable 23 and is to be inserted into the low-power-side terminal block 14a.

In the case of the present embodiment, a thermistor line 24a that is connected to a thermistor 24 embedded in the coil end 6, the fitting detection line 21, and six resolver lines 9a, for example, connected to the resolver 9 are connected to the low-power-side terminal block 14a. In the case of the present embodiment, the low-power-side terminal block 14a is attached in a state in which the low-power-side terminal block 14a penetrates through the lid member 10a from the side of the front surface of the lid member 10a closing the arrangement space 10 where the resolver 9 is arranged.

In this manner, signal cables used for control of the rotating electrical machine 1, such as the thermistor line 24a that is a cable for connecting the rotating electrical machine 1 to the connectors, the fitting detection line 21 that is a cable for establishing connection between the connectors, and the resolver lines 9a that are cables for establishing connection between the rotating electrical machine 1 and the connectors, as well as the lead lines 7 as power cables, are wired in the rotating electrical machine 1.

Next, effects of the aforementioned configuration will be described.

As described above, signal cables may be wired in the case of the in-vehicle rotating electrical machine 1, for example, and such signal cables need to be held in a predetermined wiring route to curb influences of noise and heat, for example, and are also required to allow for easy tasks such as holding and wiring of the cables. Thus, easy wiring of the cables in the predetermined wiring route is enabled as follows.

Firstly, the wiring route of the fitting detection line 21 as a target of holding and an assembly order of the rotating electrical machine 1 will be described for easy understanding of the effects and advantages of the cable holding structure, which will be described later. The fitting detection line 21 in the present embodiment establishes connection between the high-power-side connector 13 and the low-power-side connector 14 attached to the frame 8, here on the side of the front surface of the cover 8b. At this time, the fitting detection line 21 is wired in a wiring route in which the fitting detection line 21 is led out from the access space 19 to the side of the rear surface of the cover 8b, goes around by about 1/4 a loop on the side of the rear surface of the cover 8b in the circumferential direction, and is then led out from the opening connected to the arrangement space 10 to the side of the front surface of the cover 8b. In other words, the fitting detection line 21 is at least partially wired inside the frame 8 in the wiring route.

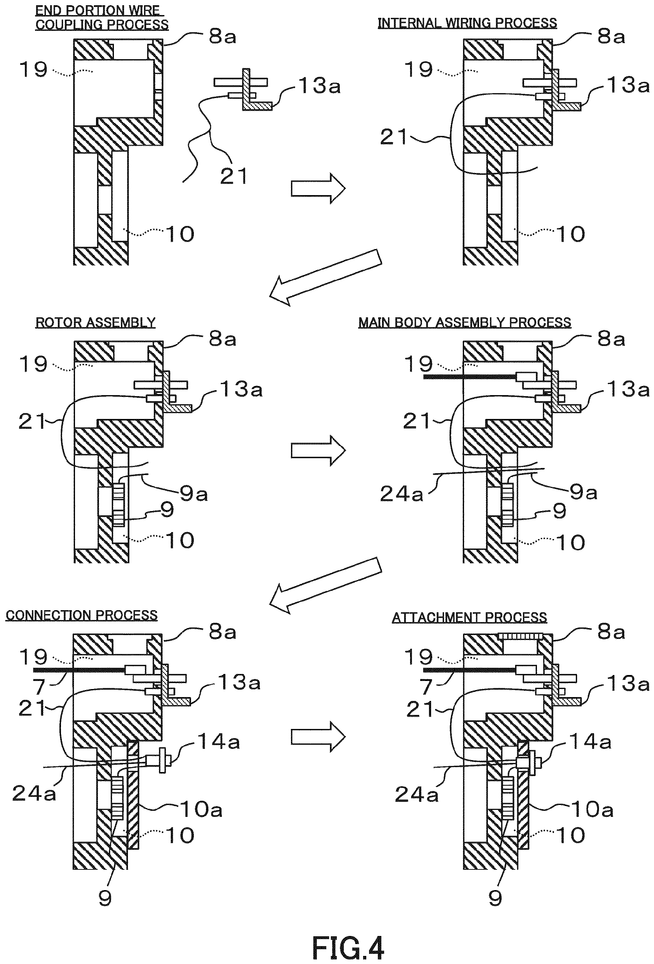

The fitting detection line 21 is wired such that one end thereof is connected to the fitting detection terminal 17 of the high-power-side connector 13 first as illustrated as an end portion wire coupling process in Figure 4 and the other end side thereof comes out to the arrangement space 10 as illustrated as an internal wiring process. Then, the rotor 3, which is not illustrated, is assembled with the cover 8b as illustrated as a rotor 3 assembly process, and the resolver 9 is attached. Note that the rotor 3 assembly process and the internal wiring process may be performed in any order.

Subsequently, end portions of the lead lines 7 are located in the access space 19, and the thermistor line 24a is led out to the arrangement space 10, by assembling the cover 8b with the main body as illustrated as a main body assembly process and thereby starting the assembly with the main body from the stator 2 secured to the main body. In the case of the present embodiment, the thermistor line 24a is led out from the coil end 6 located at about 1/4 a loop from the lead line 7 in the circumferential direction. Therefore, the leading-out position of the thermistor line 24a substantially coincides with the opening to the arrangement space 10 when the cover 8b is attached to the main body, and it is basically possible to wire the thermistor line 24a to the arrangement space 10 by leading out the thermistor line 24a straight from the coil end 6.

Then, the lead lines 7 from the coil end 6 are connected to the high-power-side terminal block 13a and the fitting detection line 21, the thermistor line 24a, and the resolver lines 9a are connected to the low-power-side terminal block 14a in a state in which the lid member 10a is attached as illustrated as a connection process, and the low-power-side terminal block 14a is then fixed to the front surface of the cover 8b as illustrated as an attachment process.

In a case of such a wiring route and assembly order, the other end of the fitting detection line 21 on the side opposite to the high-power-side terminal block 13a is in a free state during a period from the end portion connection process to the connection process. Then, the fitting detection line 21 is partially wired inside the frame 8 where it is difficult to visually recognize the fitting detection line 21 from the outside. Therefore, it is necessary to hold the fitting detection line 21 in a predetermined wiring route to prevent the position of the fitting detection line 21 from changing in the processes and prevent the fitting detection line 21 from being caught in the stator 2 or the main body portion 8a in the main body assembly process, for example.

At this time, the fitting detection line 21 is a signal cable, and it is thus desirable that the fitting detection line 21 be wired such that the fitting detection line 21 is not affected by noise and heat from the coil end 6 as much as possible. Furthermore, in order to enhance efficiency of the assembly task, the fitting detection line 21 is required to be easily held, and in terms of manufacturing costs, it is not desirable that the holding structure become complicated.

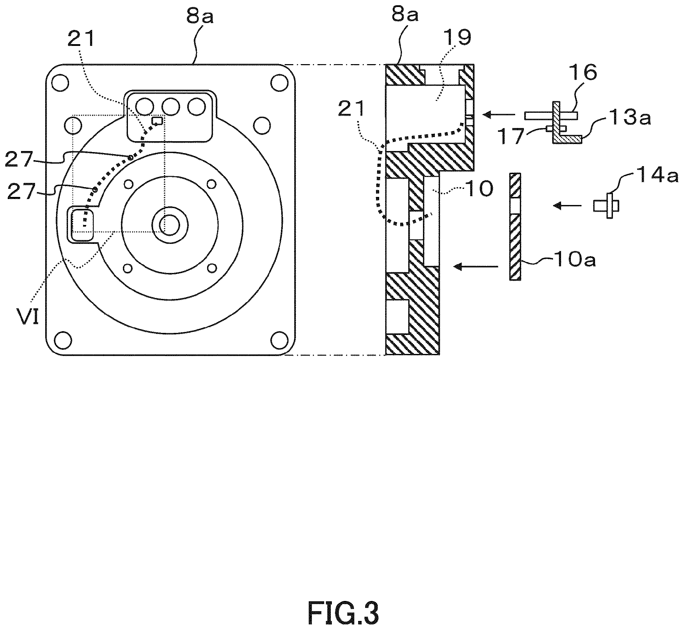

Thus, at least one attachment hole 27 is provided along the wiring route of the fitting detection line 21 on the side of the rear surface of the cover 8b as illustrated in Figure 3 in the present embodiment. The attachment hole 27 is formed into a simple columnar shape with a depth with which the attachment hole 27 does not penetrate through the cover 8b. Since the attachment hole 27 is formed in the rear surface of the cover 8b, it is possible to easily form the attachment hole with a drill, for example. In other words, it is possible to very easily form the attachment hole 27 needed for the holding structure. Although the attachment hole 27 can also be formed into a shape having irregularities on the inner surface like a screw hole, it is possible to easily form the attachment hole 27 from the side of the rear surface of the cover 8b in such a case.

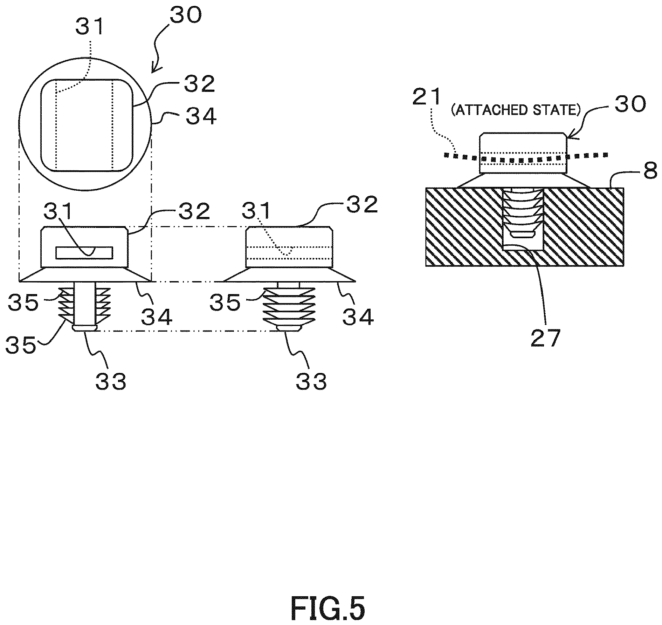

Then, a holding member 30 illustrated in Figure 5 is attached to each attachment hole 27. The holding member 30 is formed of a resin material having heat resistance, for example, and has a block-shaped head portion 32 that is provided with a through-hole 31 through which the cable passes, a columnar-shaped shaft portion 33 that extends from the head portion 32, and a flange portion 34 that is provided between the head portion 32 and the shaft portion 33 and extends outward in the radial direction of the holding member 30 from the shaft portion 33. The shaft portion 33 of the holding member 30 is provided with a plurality of umbrella portions 35 that extend outward in the radial direction, come into close contact with the inner surface of the attachment hole 27 while being elastically deformed when the shaft portion 33 is inserted into the attachment hole 27 as illustrated as an attached state, and function as falling-off preventing structures based on a restoring force and a frictional force at the time of the elastic deformation.

As the holding member 30 with such a shape, it is possible to use a binding member that is commercially available for industrial applications, in consideration of heat resistance and durability. Here, a binding member is assumed that is typically configured of a mounter having the through-hole 31 and a binding band that is caused to pass through the through-hole 31 and binds the cable placed above the mounter.

In the present embodiment, the mounter of the binding member is used as the holding member 30, and the fitting detection line 21 is held by causing the fitting detection line 21 to pass through the through-hole 31 of the mounter. Therefore, the holding member 30 according to the present embodiment can be realized by diverting a commercially available product without newly preparing the holding member 30 with a special shape.

In addition, the holding member 30 can be attached on the inner surface of the frame 8 by the shaft portion 33 being inserted or press-fitted to the attachment hole 27, and it thus becomes easy to perform the attachment task of the holding member 30. Furthermore, it is possible to hold the fitting detection line 21 by causing the fitting detection line 21 to pass through the through-hole 31 formed in advance and thereby to easily hold the cable to be held, and the cable wiring task also becomes easy. Note that a mount of a Fir Tree Mount Tie (registered trademark), for example, can be used as the holding member 30.

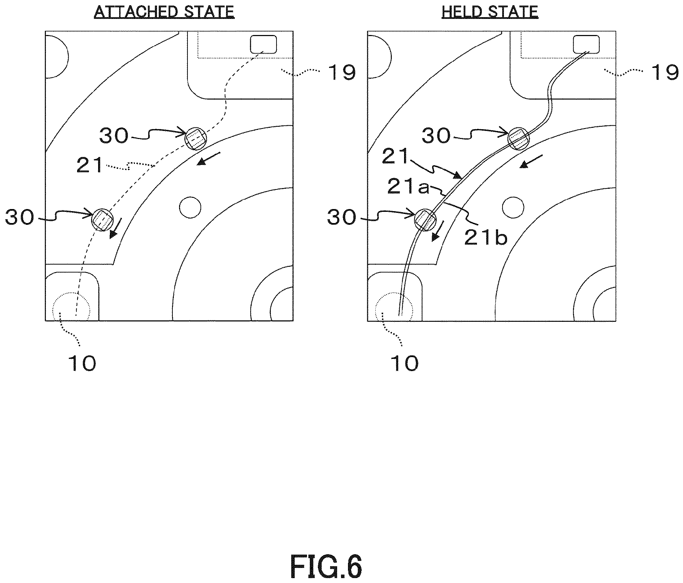

Specifically, the shaft portion 33 of the holding member 30 is inserted into each of the attachment holes 27 provided along the wiring route of the fitting detection line 21 illustrated by the dashed line, and one or more holding members 30, in the present embodiment, two holding members 30 are attached along the wiring route as illustrated as the attached state in Figure 6 in which the VI region in Figure 3 is enlarged. At this time, the orientation of the holding member 30 can be freely changed to achieve a state in which the penetrating direction of the through-hole 31 follows the wiring route as illustrated by the arrow applied to a side of the holding member 30 by turning the head portion 32 in a state in which the shaft portion 33 is inserted. Note that it is also possible to attach the holding member 30 in a state in which the fitting detection line 21 is caused to pass through the through-hole 31 in advance.

In this manner, the fitting detection line 21 can be wired to follow the wiring route without being forcibly bent, as illustrated as a held state. Furthermore, since the flange portion 34 is provided between the head portion 32 and the shaft portion 33, the fitting detection line 21 is held in a state in which a predetermined distance is maintained between the cable and the inner surface of the frame 8, and on the side close to the frame 8 inside the frame 8. Note that "close to the frame 8" means a state in which the distance to the frame is shorter than the distance to the coil end.

Although Figure 6 illustrates the detection line 21a and the detection line 21b of the fitting detection line 21, it is also possible to accommodate the detection line 21a and the detection line 21b in a heat-resistant sheath, for example and to use the holding member 30 to hold the cables that looks like a single cable, or to use the holding member 30 to hold three or more cables although it depends on the size of the through-hole 31.

According to the holding structure described above, the following advantages can be obtained.

A cable holding structure according to an embodiment is for holding a cable of a rotating electrical machine 1, the cable holding structure for a rotating electrical machine includes a holding member 30 that holds the cable and is attached to a frame 8 that accommodates the rotating electrical machine 1, in which at least one attachment hole 27 for attachment of the holding member 30 is formed in the frame 8 along a wiring route of the cable. The holding member 30 has a head portion 32 that is provided with a through-hole 31 through which the cable passes and a shaft portion 33 that extends from the head portion 32, the holding member 30 being attached to the frame 8 by the shaft portion 33 being inserted into the attachment hole 27 the holding member 30 holding the cable on a side of the frame 8.

With such a configuration, firstly, it is possible to easily attach the holding member 30 for holding the cable to the frame 8 of the rotating electrical machine 1. Furthermore, it is only necessary for the frame to which the holding member 30 is to be attached to be provided with the attachment hole 27 with a simple shape, and it is thus possible to simplify the structure for the attachment of the holding member 30.

Moreover, the cable is held on the side of the frame 8, that is, on the side away from the stator 2 and the coil end 6 inside the frame 8, with the holding member 30 attached to the frame 8 by being caused to pass through the through-hole 31. Therefore, handling of the cable is facilitated, and it is possible to easily wire the cable of the rotating electrical machine 1 in the predetermined wiring route while curbing influences of noise and heat.

At this time, since the holding member 30 is attached to the frame 8 by the shaft portion 33 being inserted into the attachment hole 27, it is possible to wire the cable along the predetermined wiring route without forcibly bending the cable by directing the penetrating direction of the through-hole 31 to the orientation along the wiring route.

In addition, the holding member 30 has a flange portion 34, between the head portion 32 and the shaft portion 33, that extends outward in a radial direction of the holding member 30 from the shaft portion 33, and the holding member 30 holds the cable on the side of the frame 8 in a state in which a predetermined distance is maintained between the cable and the frame 8. In this manner, it is possible to hold the cable in a state in which a predetermined distance is maintained between the cable and the inner surface of the frame 8 and at a position on the side of the frame 8 and to secure a creepage distance.

In addition, the cable is at least partially wired inside the frame 8, and the holding member 30 holds, on the side of the frame 8, the part of the cable wired inside the frame 8. In this manner, it is possible to hold the cable in the state in which the cable follows the predetermined wiring route and in the state in which the cable is not separated from the frame 8 even in a case in which visual recognition from the outside is difficult, and it is possible to reduce the concern that the cable is wired at an unintended position or the cable is loosened and caught in other members.

In addition, the frame 8 is provided with a plurality of connectors for external connection, and the holding member 30 holds the cable for fitting detection adapted to establish connection between the connectors and detect fitting of the cable to the connectors. In this manner, in a case in which it is necessary to wire a cable that is not connected to the rotating electrical machine 1, it is possible to prevent the position of the cable from changing in the assembly task of the rotating electrical machine 1, for example, in the task of attaching the stator 2 and the rotor 3 to the frame 8, and in the present embodiment, in the task of assembling the main body portion 8a with the cover 8b, and it is possible to curb degradation of operability.

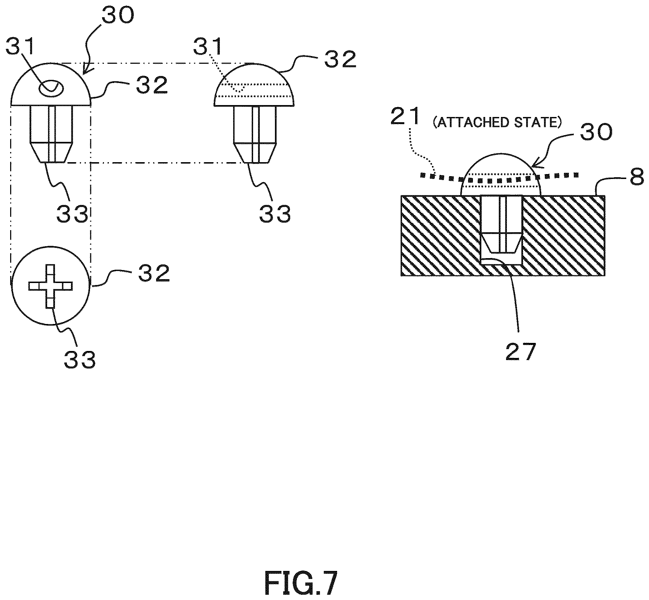

In addition, it is also possible to use a holding member 30 with a shaft portion 33 with a cross shape in a sectional view as illustrated in Figure 7. In this case, it is possible to easily achieve the attachment by the outer edges of the cross shape being elastically deformed and coming into close contact with the attachment hole 27 when the shaft portion 33 is inserted into the attachment hole 27. In this case, it is also possible to fill in the attachment hole 27 with a heat-resistant adhesive in order to further reduce the concern of falling-off due to vibration or the like although the same applies to the one in the embodiment. Additionally, it is also possible to employ a configuration in which no flange portion 34 is provided.

Although the example in which the fitting detection line 21 is a cable as a target of holding has been described in the embodiment, it is possible to regard the resolver line 9a and the thermistor line 24a as a holding target cable. In addition, it is possible to regard other cables wired in the rotating electrical machine 1 as targets of holding. For example, it is possible to regard cables connected to temperature sensors or vibration sensors as targets of holding in a configuration in which the temperature sensors are provided or the vibration sensors are provided at a plurality of locations in the rotating electrical machine 1.

Although some embodiments of the present invention have been described, these embodiments have been presented as examples and are not intended to limit the scope of the invention. These new embodiments can be implemented in other various forms, and various omissions, replacements, and changes can be made without departing from the gist of the invention. These embodiments and modifications are included in the scope and the gist of the invention and are also included in the range equivalent to the invention described in the claims.

## Claims

1. A cable holding structure for holding a cable of a rotating electrical machine, the cable holding structure for a rotating electrical machine comprising:
a holding member that holds the cable and is attached to a frame that accommodates the rotating electrical machine,
wherein at least one attachment hole for attachment of the holding member is formed in the frame along a wiring route of the cable, and
the holding member has a head portion that is provided with a through-hole through which the cable passes and a shaft portion that extends from the head portion, the holding member being attached to the frame by the shaft portion being inserted into the attachment hole, the holding member holding the cable on a side of the frame.

2. The cable holding structure for a rotating electrical machine according to claim 1, wherein the holding member has a flange portion, between the head portion and the shaft portion, that extends outward in a radial direction of the cable holding structure from the shaft portion, the holding member holding the cable in a state in which a predetermined distance is maintained between the cable and the frame.

3. The cable holding structure for a rotating electrical machine according to claim 1 or 2,
wherein the cable is at least partially wired inside the frame, and
the holding member holds, on the side of the frame, the part of the cable wired inside the frame.

4. The cable holding structure for a rotating electrical machine according to any one of claims 1 to 3,
wherein the frame is provided with a plurality of connecters for external connection, and
the holding member holds the cable for fitting detection adapted to establish connection between the connectors and detect fitting of the cable to the connectors.
